# EUROPÄISCHE PATENTSCHRIFT

(11) **EP 0 785 880 B1**
(45) Veröffentlichungstag und Bekanntmachung des Hinweises auf die Patenterteilung: **20.12.2000**
(21) Anmeldenummer: 96920707.5
(22) Anmeldetag: 27.06.1996
(51) Int. Cl.: B60R 1/06

(54) **VORRICHTUNG ZUM VERSTELLEN EINES KRAFTFAHRZEUGSPIEGELS**
MOTOR VEHICLE MIRROR ADJUSTING DEVICE
DISPOSITIF DE REGLAGE D'UN RETROVISEUR POUR VEHICULE A MOTEUR

(30) Priorität: 21.07.1995 DE 29511817 U
(43) Veröffentlichungstag der Anmeldung: 30.07.1997
(73) Patentinhaber: Bühler Motor GmbH, 90212 Nürnberg (DE)
(72) Erfinder: LAMPRECHT, Paul, D-77830 Bühlertal (DE); FORNOFF, Dieter, D-76356 Weingarten (DE); DILGER, Werner, D-77815 Bühl (DE); DREIER, Friedrich-Wilhelm, D-76547 Sinzheim (DE)
(86) Internationale Anmeldenummer: DE9601132
(87) Internationale Veröffentlichungsnummer: WO9703863

(56) Entgegenhaltungen:
- EP-A- 0 196 608
- EP-A- 0 290 231
- NL-A- 9 200 412
- US-A- 4 915 493

## Beschreibung

### Stand der Technik

Die Erfindung betrifft eine Vorrichtung zum Verstellen eines Kraftfahrzeugspiegels nach der Gattung des Anspruchs 1.

Bei einer im Handel befindlichen Verstellvorrichtung dieser Art siehe NL-A-92 000 412 ist zur Vermeidung einer Hysteresewirkung beim Anfahren von in der Steuerelektronik gespeicherten Betriebsstellungen des Spiegels der Schleifer des Potentiometers zu dessen einer Endlage hin federbelastet. Wenn der Schleifer jedoch entgegen der Federspannung verschoben werden soll, muß der Antriebsmotor neben dem Durchführen der Stellbewegung auch diese Hilfsfeder spannen. Diese zusätzliche Belastung ist bei der Auslegung des Antriebsmotors zu berücksichtigen, so daß der als Kleinstmotor ausgeführte Antriebsmotor voluminöser ausgeführt werden muß. Dadurch ergeben sich Schwierigkeiten bei dessen Unterbringung im vorgegebenen Spiegelgehäuse. Dies umso mehr, als zur exakten Einstellung des Spiegels dieser zumindest um zwei Ebenen verstellt werden muß, wozu ein weiterer Antriebsmotor nebst Untersetzungsgetriebe etc. im Spiegelgehäuse untergebracht werden muß.

### Vorteile der Erfindung

Die erfindungsgemäße Vorrichtung mit den kennzeichnenden Merkmalen des Anspruchs 1 hat demgegenüber den Vorteil, daß die Hilfsfeder entfallen kann, weil jede Stellbewegung der Gewindespindel hysteresefrei durch das Gestänge und die beiden vorgespannten und damit spielfreien Gelenke auf den Schleifer des Potentiometer übertragen wird. Dadurch ist es möglich die Auslegung des Antriebsmotors alleine nach der erforderlichen Verstellkraft auszurichten, so daß dieser besonders kompakt baut.

In Weiterbildung der Erfindung ist die als Stellager zu bezeichnende Gelenkverbindung zwischen Gewindespindel und Spiegelträger als Kugelgelenk ausgebildet, dessen Kugelzapfen an der Gewindespindel angeordnet ist. Dadurch ist auf einfache Weise ein exaktes Einstellen des Spiegels möglich, weil dieser bei geringem konstruktiven Aufwand in beliebigen Ebenen verstellt werden werden kann.

Eine besonders einfache Verbindung zwischen Gewindespindel und Gestänge ergibt sich, wenn die Gewindespindel im Bereich des Kugelzapfens einen Querarm aufweist, der mit der einen Hälfte der Gelenkverbindung zum Gestänge versehen ist.

Der gleiche Vorteil wird bei der Verbindung zwischen Schleifer und Gestänge erreicht, wenn der Schleifer einen quer zur Schleifrichtung vorspringenden Ansatz hat, der mit der einen Hälfte der Gelenkverbindung zum Gestänge versehen ist.

Da sich durch das Kippgelenk im Hauptlager eine gekrümmte Bewegung der Koppelverbindung zwischen Gewindespindel und Spiegelträger ergibt, der Schleifer jedoch eine geradlinige Bewegung ausführt, können die sich daraus während des Betriebs der Vorrichtung ergebenden Abstandsdifferenzen dadurch ausgeglichen werden, daß die einen Hälften der als Koppellager zu bezeichnenden Gelenkverbindungen als Kugelbolzen ausgebildet sind, denen zweckmäßig die anderen am Gestänge angeordneten, als Kugelpfannen ausgeführten Gelenkverbindungshälften der Koppellager zugeordnet sind.

Besonders kostengünstig ist es, wenn das Gestänge und die Kugelpfannen einstückig ausgebildet und aus einem elastischen Kunststoff gefertigt sind.

Wenn das Schleifpotentiometer als Doppelpotentiometer ausgebildet ist, dessen beide Abgriffe jeweils einem gesonderten Antriebsmotor zugeordnet sind, kann ein zweiter, einem weiteren im Gehäuse unterzubringenden Antriebsmotor zugeordneter Schiebepotentiometer entfallen. Es ergeben sich somit neben der Raumersparnis auch Vorteile durch eine vereinfachte Verkabelung innerhalb des Vorrichtungsgehäuses.

Weitere Vorteile sind der nachfolgenden Beschreibung der Erfindung zu entnehmen.

### Zeichnung

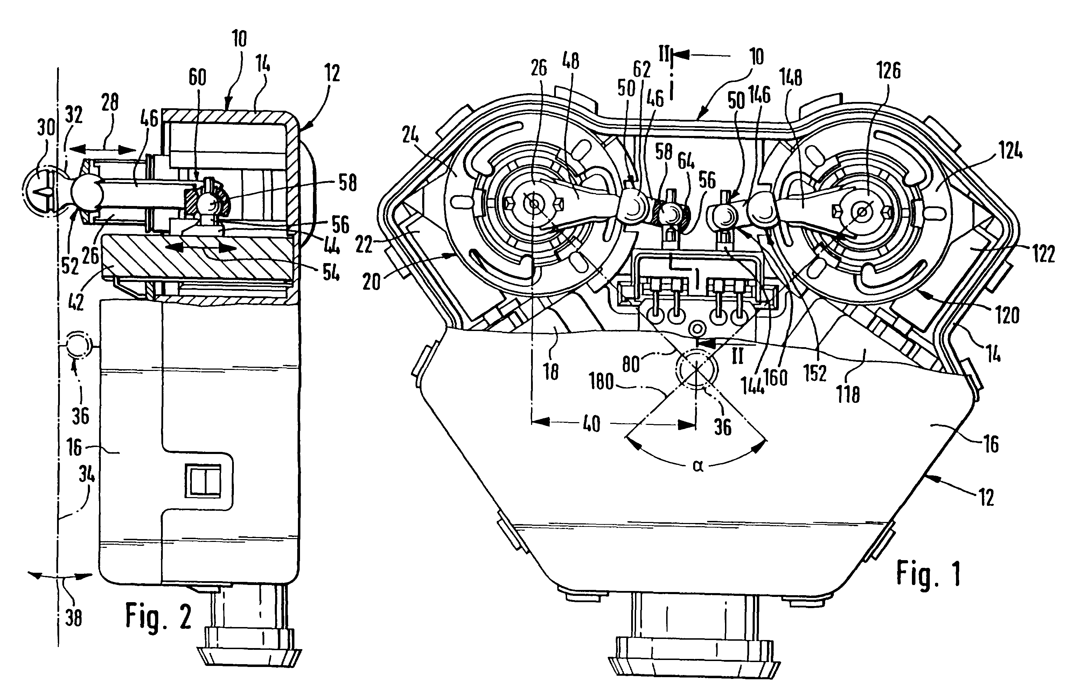

Eine Ausführungsform der Erfindung ist in der Zeichnung dargestellt und in der nachfolgenden Beschreibung näher erläutert. Es zeigen Figur 1 eine Draufsicht auf eine Vorrichtung zum Verstellen eines Außenspiegels in einem Kraftfahrzeug, mit einem teilweise aufgebrochenen Gehäuse und Figur 2 einen Teilschnitt durch die Vorrichtung gemäß Figur 1, entlang der Linie II-II in Figur 1.

### Beschreibung des Ausführungsbeispiels

Eine in der Zeichnung dargestellte Vorrichtung 10 weist ein Gehäuse 12 auf, zu dem ein Gehäusekörper 14 und ein Gehäusedeckel 16 gehören. In dem Gehäuse 12 sind ein Antriebsmotor 18 und ein diesem nachgeordnetes, als Schneckengetriebe ausgebildetes Untersetzungsgetriebe 20 untergebracht. Das Schneckengetriebe weist eine mit der Ankerwelle des Antriebsmotors 18 verbundene Schneckenwelle 22 auf, die mit einem Schneckenrad 24 in Eingriff steht. Das Schneckenrad 24 ist mit einer Zentralbohrung versehen, deren Wandung ein Mutterngewinde aufweist, in welches eine Gewindespindel 26 eingeschraubt ist. Die Gewindespindel 26 ist so montiert, daß sie nicht gedreht werden kann. Wenn jedoch der drehrichtungsumschaltbare, elektrische Antriebsmotor 18 eingeschaltet wird, und somit die Schneckenwelle 22 das Schneckenrad 24 antreibt, wird die Gewindespindel, je nach Drehrichtung der Schneckenwelle 22 in eine der beiden Richtungen verschoben werden, welche durch den Doppelpfeil 28 in Figur 2 angedeutet sind. Weiter zeigt Figur 2, daß die Gewindespindel 26 an ihrem aus dem Gehäuse 12 ragenden Ende mit einem Kugelzapfen 30 versehen ist, der in einer Kugelpfanne 32 eines strichpunktiert angedeuteten, plattenartigen Spiegelträgers 34 sitzt. Es ergibt sich somit ein Stellager, das die Lagerkomponenten 30 und 32 umfaßt. Da der Spiegelträger 34 gleichzeitig noch in einem als Kugelgelenk ausgebildeten Hauptlager 36 am Gehäusedeckel 16 gehalten ist, wird bei Betätigung des elektrischen Antriebsmotors 18 der Spiegelträger 34, je nach Drehrichtung der Schneckenwelle 22 in Richtung des gekrümmten Doppelpfeils 38 (Figur 2) gekippt. Dies ist deshalb möglich, weil die Ankoppelung der Gewindespindel 26 über das als Kugelgelenk ausgebildete Stellager 30, 32 mit seitlichem Abstand 40 (Figur 1) von dem gehäusefesten Hauptlager 36 erfolgt. Der Spiegelträger ist in an sich bekannter Weise mit einem hier nicht dargestellten Spiegel versehen, so daß durch die Stellbewegung (Doppelpfeil 28 bzw. 38) eine Einstellung des Spiegels in einer bestimmten Ebene vorgenommen werden kann. Zur Einstellung des Spiegels in einer zweiten Ebene weist die Stellvorrichtung 10 einen zweiten elektrischen Antriebsmotor 118 auf, der ebenfalls über ein Untersetzungsgetriebe 120, das eine Schneckenwelle 122 und ein Schneckenrad 124 hat, auf eine zweite Gewindespindel 126 einwirkt. Bezogen auf das Hauptlager 36 sind die beiden Gewindespindeln 26 bzw. 126 so angeordnet, daß durch die Spindelachsen und das Hauptlager 36 gelegte Linien 80 bzw. 180 zumindest annähernd einen Winkel a von 90° einschließen (Figur 1). Die Koppelung zwischen dieser Gewindespindel 126 und dem Spiegelträger 34 geschieht in der schon beschriebenen Art und Weise. Durch Betätigung des Antriebsmotors 118 kann nun der Spiegelträger 34 in einer zweiten Ebene verstellt werden, so daß eine einwandfreie, präzise Einstellung des Spiegels vorgenommen werden kann. Aus vorstehendem ist klar ersichtlich, daß der Spiegelträger 34 und damit auch der mit diesem verbundene Spiegel in Abhängigkeit von der Verschiebebewegung (Doppelpfeil 28) der Gewindespindel 26 quer zur Erstreckungsebene des Spiegelträgers und damit auch zur Erstreckungsebene des Spiegels gekippt werden kann. Weiter ist in dem Gehäuse 12 ein als Doppelpotentiometer ausgebildetes Schleifpotentiometer 42 untergebracht. Dieses Potentiometer ist in Figur 2 als geschlossener Kasten im Schnitt dargestellt. Sein innerer Aufbau interessiert im vorliegenden Zusammenhang nicht. Das Schiebepotentiometer ist fest mit dem Gehäuse 12 verbunden und weist einen Schleifer 44 auf, der über als Koppelstange 46 ausgebildete Verbindungsmittel mit der Gewindespindel 26 verbunden ist. Dazu weist die Gewindespindel im Bereich des Kugelzapfens 30 einen Querarm 48 auf, an dessen freiem Ende ein Kugelzapfen 50 angeordnet ist, der die eine Hälfte einer Gelenkverbindung 52 zwischen Koppelstange 46 und dem Querarm 48 der Gewindespindel 26 bildet. Weiter weist der Schleifer 44 des Potentiometers 42 einen quer zur Schleifrichtung (Doppelpfeil 54 in Figur 2) vorspringenden Ansatz 56 auf, der ebenfalls mit einem Kugelzapfen 58 (Figur 2) versehen ist. Auch dieser Kugelzapfen 58 bildet die eine Hälfte einer Gelenkverbindung 60 (Figur 2) zwischen der Koppelstange 46 und dem Schleifer 44. Die beiden Gelenkverbindungen 52 und 60 bilden Koppellager und sind vorgespannt ausgeführt; d.h., daß die jeweiligen zu diesen gehörenden Kugelpfannen 62 und 64 der Koppelstange 46 so ausgelegt sind, daß sie unter vorübergehender, elastischer Aufweitung auf ihre Kugelzapfen 62 und 58 aufgerastet werden können und dann noch mit geringer Vorspannung an diesen Kugelzapfen anliegen. Dadurch wird eine spielfreie Gelenkverbindung gewährleistet. Diese Forderung wird auf einfache Weise dadurch erfüllt, daß man die Koppelstange 46 und die einstückig mit ihr verbundenen Kugelpfannen 62, 64 aus einem elastischen Kunststoff herstellt.

Es sei darauf hingewiesen, daß zwischen der Gewindespindel 126 und dem zweiten Schleifer 144 des Doppelschleifpotentiometers eine gleichartige Gestängeverbindung besteht, von der der besseren Übersichtlichkeit wegen lediglich die den Bauelementen 48, 62, 46 und 60 entsprechenden Elemente mit Bezugsziffern versehen worden sind, welche um die Zahl 100 höher sind als beim schon beschriebenen Antrieb.

Die Gestängeverbindung zwischen der Gewindespindel 26 und dem Schleifer 44 umfaßt somit die Querarme 48 bzw. 148, die als Kugelgelenke ausgebildeten Gelenkverbindungen 52 bzw. 152 zwischen den Querarmen und den Koppelstangen 46 bzw. 146, sowie die als Kugelgelenke ausgebildeten Gelenkverbindungen 60 bzw. 160 zwischen den Koppelstangen 46 bzw. 146 und den Schleifern 44 bzw. 144. Somit kann jeder der beiden zu einem einzigen Bauelement zusammengefaßten Schleifpotentiometern ein bestimmtes elektrisches Signal an eine den jeweiligen Antriebsmotor 18 bzw. 118 beeinflussenden, in der Zeichnung nicht dargestellten Steuerelektronik melden, welches einer ganz bestimmten Stellung der jeweiligen Gewindespindel 26 bzw. 126 zugeordnet ist. Daraus ergibt sich auch eine ganz bestimmte definierte Stellung des Spiegelträgers 34 bzw. des mit diesem verbundenen Spiegels. Abweichungen durch Hysterese sind nicht möglich. Weiter werden durch die Kugelgelenkverbindungen zwischen den Koppelstangen 46 bzw. 146 und den Gewindespindeln 26 bzw. 126 und den Schleifern 44 bzw. 144 auch die sich zwangsläufig beim Verstellen des Spiegelträgers 38 ergebenden Abstandsdifferenzen zwischen diesen Kugelgelenkverbindungen selbsttätig ausgeglichen. Diese Abstandsdifferenzen rühren daher, daß die Gewindespindeln eine geradlinige Bewegung ausführen, während der Spiegelträger bzw. die an diesem angeordnete Kugelgelenkverbindung 30, 32 zwischen Gewindespindel und Spiegelträger eine gekrümmte Bewegung ausführt, deren Krümmungszentrum durch das Hauptlager 36 gebildet ist.

Zum prinzipiellen Aufbau der beschriebenen Verstelleinrichtung sei noch auf die DE 39 13 776 A1 verwiesen, auf die hier ausdrücklich Bezug genommen wird. Somit wird die Offenbarung aus dieser Offenlegungsschrift auch zur Offenbarung der Beschreibung der vorliegenden Erfindung.

## Patentansprüche

1. Vorrichtung zum Verstellen eines Kraftfahrzeugspiegels mit einem Gehäuse (12), in dem wenigstens ein drehrichtungsumkehrbarer, elektrischer Antriebsmotor (18) untergebracht ist, der über ein Untersetzungsgetriebe (20) auf eine längsverschiebbare Gewindespindel (26) wirkt, deren eines Ende über eine Gelenkverbindung mit einem quer zur Gewindespindelachse angeordneten, plattenartigen Spiegelträger (34) gekoppelt ist, welcher an einem mit seitlichem Abstand von der Gewindespindelachse befindlichen, gehäusefesten Hauptlager (36) in Abhängigkeit von der Verschiebebewegung der Gewindespindel (26) quer zu seiner Erstreckungsebene kippbar ist und die Gewindespindel (26) über Verbindungsmittel mit dem Schleifer (44) eines Schleifpotentiometers (42) wirkverbunden ist, welches die sich aus der jeweiligen Spindelposition ergebenden elektrischen Signale des Potentiometers (42) einer den Antriebsmotor (18) beeinflussenden Steuerelektronik meldet, dadurch gekennzeichnet, daß die Verbindungsmittel durch ein Gestänge (48, 46, 56) gebildet sind, das einerseits mit der Gewindespindel (26) und andererseits mit dem Schleifer (44) gelenkig verbunden ist und daß die beiden Gelenke spielfrei vorgespannt sind.

2. Vorrichtung nach Anspruch 1, dadurch gekennzeichnet, daß die Gelenkverbindung zwischen der Gewindespindel (26) und dem Spiegelträger (34) als Kugelgelenk (30, 32) ausgebildet ist, dessen Kugelzapfen (30) am Ende der Gewindespindel (26) angeordnet ist.

3. Vorrichtung nach Anspruch 2, dadurch gekennzeichnet, daß die Gewindespindel (26) im Bereich des Kugelzapfens (30) einen Querarm (48) aufweist, der mit der einen Hälfte der Gelenkverbindung zum Gestänge (46) versehen ist.

4. Vorrichtung nach einem der Ansprüche 1 bis 3, dadurch gekennzeichnet, daß der Schleifer (44) einen senkrecht zur Schleifebene vorspringenden Ansatz (56) hat, der mit der einen Hälfte der Gelenkverbindung zum Gestänge (46) versehen ist.

5. Vorrichtung nach Anspruch 4, dadurch gekennzeichnet, daß die einen Hälften der Gelenkverbindungen als Kugelbolzen (62, 58) ausgebildet sind.

6. Vorrichtung nach Anspruch 5, dadurch gekennzeichnet, daß die anderen, am Gestänge (46) angeordneten Gelenkverbindungshälften als Kugelpfannen (62, 64) ausgebildet sind.

7. Vorrichtung nach Anspruch 6, dadurch gekennzeichnet, daß das Gestänge (46) und die Kugelpfannen (62, 64) einstückig ausgebildet und aus einem elastischen Kunststoff gefertigt sind.

8. Vorrichtung nach einem der Ansprüche 1 bis 7, dadurch gekennzeichnet, daß das Schleifpotentiometer (42) als Doppelpotentiometer ausgebildet ist, dessen beiden Abgriffe jeweils einem gesonderen Antriebsmotor (18 bzw. 118) zugeordnet sind.

## Claims

1. A device for adjusting a motor vehicle mirror, comprising a housing (12) in which is arranged at least one reversible electric drive motor (18) which acts via a reduction gear (20) on a longitudinally displaceable threaded spindle (26), one end of which is connected via an articulation to a plate-shaped mirror carrier (34) arranged transversely to the axis of the threaded spindle, the mirror carrier (34) being tiltable on a main bearing (36) transversely to its plane of extension as a function of the displacement movement of the threaded spindle (26), the main bearing (36) being integral with the housing and laterally spaced from the axis of the threaded spindle, and the threaded spindle (26) is operatively connected via connecting means to the slider (44) of a sliding potentiometer (42) transmitting the electrical signals, indicating the respective spindle position, from the potentiometer (42) to a control electronics system controlling the drive motor (18), characterised in that the connecting means are formed by linkage (48, 46, 56) articulated at one end on the threaded spindle (26) and at the other end on the slider (44) and in that the two joints are prestressed without play.

2. A device according to claim 1, characterised in that the articulated connection between the threaded spindle (26) and the mirror carrier (34) is formed as a ball joint (30, 32), the ball pin (30) of which is arranged at the end of the threaded spindle (26).

3. A device according to claim 2, characterised in that the threaded spindle (26) has, in the region of the ball pin (30), a transverse arm (48) provided with one half of the articulated connection to the linkage (46).

4. A device according to any one of claims 1 to 3, characterised in that the slider (44) has a projection (56) extending transversely to the sliding plane and provided with one half of the articulated connection to the linkage (46).

5. A device according to claim 4, characterised in that the first halves of the articulated connections are formed as ball pins (62, 58).

6. A device according to claim 5, characterised in that the second halves of the articulated connections are arranged on the linkage (46) and are formed as ball sockets (62, 64).

7. A device according to claim 6, characterised in that the linkage (46) and the ball sockets (62, 64) are formed in one piece and are made of a resilient plastic.

8. A device according to any one of claims 1 to 7, characterised in that the sliding potentiometer (42) is formed as a dual potentiometer, the two taps of which are each associated with a separate drive motor (18, 118).

## Revendications

1. Dispositif pour régler un rétroviseur de véhicule, comprenant un boîtier (12), dans lequel est logé au moins un moteur d'entraînement électrique (18) à sens de rotation inversible, celui-ci agissant par l'intermédiaire d'une transmission à démultiplication (20) sur une tige filetée (26) en translation dans le sens longitudinal, dont une extrémité est accouplée à un porte-rétroviseur (34) en forme de plaque, agencé perpendiculairement à l'axe de la tige filetée, par l'intermédiaire d'une jonction articulée, ledit porte rétroviseur étant susceptible de basculer perpendiculairement à son plan d'ensemble en fonction du déplacement de translation de la tige filetée (26) sur un palier principal (36) solidaire du boîtier et situé latéralement à distance de l'axe de la tige filetée, et la tige filetée (26) est reliée de façon mécanique par des moyens de liaison au curseur (44) d'un potentiomètre à curseur (42) qui transmet les signaux électriques du potentiomètre (42) qui résultent de la position respective de la tige filetée à une unité électronique de commande qui pilote le moteur d'entraînement (18), caractérisé en ce que les moyens de liaison sont formés par une tringlerie (48, 46, 56) reliée de façon articulée d'une part à la tige filetée (26) et d'autre part au curseur (44), et ce que les deux articulations sont précontraintes sans jeu.

2. Dispositif selon la revendication 1, caractérisé en ce que la liaison articulée entre la tige filetée (26) et le porte-rétroviseur (34) est réalisée sous forme d'articulation sphérique (30, 32), dont l'embout sphérique (30) est agencé à l'extrémité de la tige filetée (26).

3. Dispositif selon la revendication 2, caractérisé en ce que la tige filetée (26) comporte dans la région de l'embout sphérique (30) un bras transversal (48), lequel est pourvu d'une moitié de la jonction articulée vers la tringlerie (46).

4. Dispositif selon l'une des revendications 1 à 3, caractérisé en ce que le curseur (44) comporte un talon (56) qui dépasse perpendiculairement au plan de son déplacement, ledit talon étant pourvu d'une moitié de la jonction articulée vers la tringlerie (46).

5. Dispositif selon la revendication 4, caractérisé en ce que lesdites moitiés des jonctions articulées sont réalisées sous forme de goujons sphériques (62, 58).

6. Dispositif selon la revendication 5, caractérisé en ce que les autres moitiés des jonctions articulées agencées sur la tringlerie (46) sont réalisées sous forme de pannes sphériques (62, 64).

7. Dispositif selon la revendication 6, caractérisé en ce que la tringlerie (46) et les pannes sphériques (62, 64) sont réalisées d'une seule pièce et produites avec une matière plastique élastique.

8. Dispositif selon l'une des revendications 1 à 7, caractérisé en ce que le potentiomètre à curseur (42) est réalisé sous forme de potentiomètre double, dont les deux prises sont associées à un moteur d'entraînement particulier respectif (18 ; 118).
